# EUROPEAN PATENT SPECIFICATION

(11) **EP 2 475 983 B1**
(45) Date of publication and mention of the grant of the patent: **20.11.2013**
(21) Application number: 10757725.6
(22) Date of filing: 07.09.2010
(51) Int. Cl.: G01N 30/32, G01N 30/36, G01N 30/60, G01N 30/90, G01N 30/38

(54) **FLOW CONTROL IN MULTIDIMENSIONAL CHROMATOGRAPHY**
STEUERUNG DES DURCHFLUSSES IN MULTIDIMENSIONALER CHROMATOGRAPHIE
CONTRÔLE DE FLUX EN CHROMATOGRAPHIE MULTIDIMENSIONNELLLE

(30) Priority: 07.09.2009 DE 102009040180
(43) Date of publication of application: 18.07.2012
(73) Proprietor: Dionex Benelux B.V., 1046 AA Amsterdam (NL)
(72) Inventor: EELTINK, Sebastiaan, B-1040 Brussels (BE); SCHOENMAKERS, Peter, J., NL-1724 NV Oudkarspel (NL)
(74) Representative: Mischung, Ralf
(86) International application number: PCT/EP2010/005468
(87) International publication number: WO 2011/026649

(56) References cited:
- WO-A1-92/03726
- US-A- 4 469 601
- GUIOCHON G ET AL: "Theoretical investigation of the potentialities of the use of a multidimensional column in chromatography", JOURNAL OF CHROMATOGRAPHY, ELSEVIER SCIENCE PUBLISHERS B.V, NL LNKD- DOI:10.1016/S0021-9673(01)88298-4, vol. 255, 21 January 1983 (1983-01-21), pages 415-437, XP026475445, ISSN: 0021-9673 [retrieved on 1983-01-21]
- BEREZKIN V G ET AL: "Three-dimensional thin-layer chromatography on plates with open and closed adsorption layers", JPC. JOURNAL OF PLANAR CHROMATOGRAPHY, MODERN TLC, HUETHIG, HEIDELBERG, DE, vol. 22, no. 5, 1 October 2009 (2009-10-01), pages 313-319, XP009141525, ISSN: 0933-4173

## Description

The present invention relates to a method of carrying out a three-dimensional chromatography according to the preamble of claim 1.

The principle of chromatography as such has been known from the prior art for a long time. Here, a mobile phase containing (specific) components to be separated passes through *columns,* for example. Specific interactions of the analytes with the stationary phase lead to a separation of the individual components emerging from the column with different time lags. For a separation of highly complex samples/mixtures, two-dimension chromatography outperforms one-dimensional chromatography, and three-dimensional chromatography in turn outperforms two-dimensional chromatography.

The principle of three-dimensional chromatography is known from document US 4,469,601, too. There, a two-dimensional chromatography is performed along a plate. The plate is permeable and, when dried, is placed against a cube of material. Then, a solvent is forced through the plate and through the cube in order to use the retention mechanism that is provided in that third dimension. Although this way of proceeding of the three-dimensional chromatography is troublesome and the structure of the separation body is complex, the method as such nevertheless represents the advantages of spatial (3D) chromatography.

Usually, the mobile phase migrates through the separation body as a result of a pressure difference applied. Alternatively, under suitable conditions an (electro-osmotic) flow may also be realised by applying an electric voltage.

In the light of this known prior art, the object of the present invention is to improve the results of three-dimensional chromatography with suitable means leading to better and more reliable (precise, accurate) results in a shorter time.

The object is achieved with a method according to claim 1.

The invention is based on the idea that the course of the three-dimensional chromatography is essentially influenced by the way the mobile phase moves through the separation body and that it is possible to use suitable means to influence the flow behaviour of the mobile phase inside the three-dimensional separation body.

The method according to the invention starts out from a three-dimensional separation body which extends in space in three directions X, Y and Z preferably orthogonal to one another. The three-dimensional chromatography is preferably carried out in three successive steps; in each step, a mobile phase is forced through the separation body in one of the directions X, Y or Z. The retention capacity of the separation body for sample components transported with the mobile phase causes their separation along this flow direction X, Y or Z. Every subsequent step of chromatography leads to a further separation of those components which have already been separated in a direction perpendicular thereto in the preceding step. The third and last step leads to a distribution or separation of the components in the Z-direction (separation in space) or to a temporal separation of the components, with the result that they emerge from the separation body at a boundary surface in the Z-direction at different points of time (separation in time).

As already mentioned, the mobile phase is typically caused to pass through the separation body by applying a pressure difference or an electric voltage.

According to the invention, this method, which is known as such, is developed further in that the flow of the at least one mobile phase inside the separation body is deliberately controlled as to space and/or time by locally influencing the chemical and/or physical properties of the separation body. Through this, the flow of the mobile phase inside the separation body is controlled or restricted deliberately and in a locally dependent manner, so a more precise result of chromatography can be obtained by means of more exactly predetermined flows. In particular, with the aid of this influence, the flow can be optimally restricted to precisely one of the directions X, Y or Z, so spreading of the mobile phase transversely to this deliberately caused direction of flow is prevented in the best way possible. Thereby, uncertainties in the developments achieved can be reduced or avoided completely.

Moreover, locally influencing the physical or chemical properties of the separation body also makes it possible to control the flow along the entire direction X, Y or Z. Thus, it would also be possible to cause different flow rates within one step of chromatography, i.e. along one of the directions X, Y or Z, so the mobile phase flows partially faster, partially more slowly, in that particular direction.

The flow control according to the invention can be promoted by providing zones of different chemical or physical properties inside the separation body from the start, so the mobile phase is automatically subjected to the local flow conditions and is guided accordingly along the flow path it takes. Another aspect of the invention consists in deliberately influencing the physical or chemical properties inside the separation body in terms of space or time by means of external action so as to be able to design the flow conditions inside the separation body.

An embodiment of the method according to the invention provides that the direction of flow and/or amount of flow inside the separation body is controlled by local electromigration by controlling the surface charge.

Another aspect of the invention is directed to eluent demixing and dewetting phenomena. Here, flow control is achieved by restraining the mobile phase to specific areas of the separation body.

Another aspect of the invention relates to chemical reagents, which may only be made available in certain regions of the separation body, for example by allowing the reagent to diffuse into the body by capillary action initiated from outside the body during a limited period of time. Alternatively, any of the flow control options, as described in this patent, can be used to deliver reagents to specific parts of the separation body.

Another way to control the flow inside the separation body is to activate micro- or nanoswitches in order to open or close pores or channels inside the body to allow or obstruct flow of the eluent. Those switches may be activated by applying a voltage or chemical reaction with reagents introduced into the mobile phase. Alternatively, such switches may be activated by radiation focused on certain areas of the body.

In general, flow control according to the invention may advantageously be performed over a limited period of time or within a limited area of the separation body. Thus, temporary flow control may serve to e.g. permit the flow of the mobile phase only in the X-direction for the moment. Then, the influencing factors determining the direction of flow may be cancelled or changed in such a way that the mobile phase now basically flows in the Y-direction or in the Z-direction. Independently of or in addition to the outer conditions (pressure difference or electric voltage applied), the flow of the mobile phase inside the block may thus be directed to a specific direction X, Y or Z by means of well-aimed influence from outside. In particular, depending on the type of influence from outside, the flow of the mobile phase may be directed into different directions X, Y or Z of space at a specific position inside the separation body in order to obtain a well-aimed flow and above all in order to avoid a flow of the mobile phase into a different direction that is not desired at this point of time. On the one hand, this makes it possible to accelerate the three-dimensional chromatography to a considerable extent and on the other hand, the individual target components can be separated from one another more clearly since the flow of the mobile phase can be restricted to only one direction of space for each step of chromatography in the best way possible.

Other advantageous embodiments are defined in the subclaims.

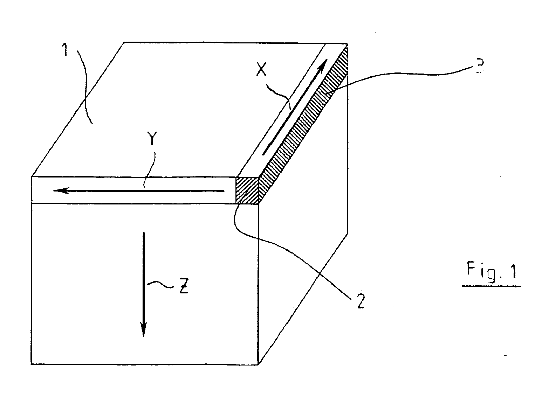

In the following, the basic principle of the method according to the invention is to be explained in greater detail with the aid of an example shown in the Figure. Fig. 1 is a schematic representation of a separation body used for the method according to this invention.

As shown in Fig. 1, a spatial separation body 1 according to the invention extends in three directions X, Y, Z, that are perpendicular to one another. Even though the body may be monolithic, it provides a specific retention mechanism in each of the directions X, Y, Z.

To perform three-dimensional chromatography, the mobile phase is first introduced to the body through a limited upper edge area 2, which is illustrated in Fig. 1 in a disproportionate, enlarged way. Preferably, the mobile phase will penetrate the body 1 only in the first direction X during the first step of the method, along an upper edge of the body, without any mobile phase moving towards the other directions Y and Z.

During this first step, a separation of components along the X-axis of the block will occur according to the retention mechanism provided in that direction. Preferably, the components will distribute individually along that first axis ("separation in space").

After this first step, a mobile phase is introduced to penetrate the upper edge of the body 2 in the Y-direction, perpendicular to the distribution of the first step and along the entire length X through a narrow strip 3. The phase will flow in the Y-direction, preferably without any variations into the other directions X or Z, and effect an additional separation in this second dimension of those components, which were located at a specific X-position after the first step. As a result, the component will further be separated in another "separation in space" across an X-Y-area, which could be the upper surface of the body 1 of Fig. 1.

The third separation step includes penetration of the body perpendicular to the X-Y-surface that has undergone the previous step. A mobile phase is forced through the body in the Z-direction, causing another separation of the components which were located at specific X-Y-positions after the second step of the three-dimensional chromatography.

This separation may again occur "in space", ending up with a distinct distribution of components along all three directions X, Y and Z of the body. Another type of separation ("in time") occurs when the components are driven through the body entirely for this last step, but emerge from it at different points of time due to the retention mechanism chosen in that Z-direction.

According to the invention, the flow of the mobile phase inside the separation body is deliberately controlled in terms of space and/or time by locally influencing the chemical and/or physical properties of the separation body.

## Claims

1. A method of carrying out three-dimensional chromatography, wherein at least one mobile phase passes through a separation body (1), said separation body (1) extending in three directions (X, Y, Z) that are preferably perpendicular to one another, and said body (1) having a retention mechanism that can be predetermined in each direction for an analyte transported in a mobile phase, said mobile phase passing through the separation body as a result of a pressure difference or an electric voltage applied to the separation body,
**characterized in that**
the flow of at least one mobile phase inside the separation body is deliberately controlled in terms of space and/or time by locally influencing the chemical and/or physical properties of the separation body.

2. A method according to claim 1, **characterized in that** the direction of flow and/or the amount of flow inside the separation body is controlled by local electromigration by controlling the surface charge.

3. A method according to one of the preceding claims, **characterized in that** the direction of flow and/or the amount of flow inside the separation body is controlled locally by means of semipermeable walls.

4. A method according to one of the preceding claims, **characterized in that** the direction of flow and/or the amount of flow inside the separation body is controlled locally by means of de-wetting.

5. A method according to one of the preceding claims, **characterized in that** the direction of flow and/or the amount of flow inside the separation body is controlled locally by means of eluent demixing.

6. A method according to one of the preceding claims, **characterized in that** the direction of flow and/or the amount of flow inside the separation body is controlled locally by means of thermally or light-controlled micro-valves.

7. A method according to one of the preceding claims, **characterized in that** the direction of flow and/or the amount of flow inside the separation body is controlled locally by means of thermally or electrically controllable variation of the physical or chemical properties of the separation body.

8. A method according to one of the preceding claims, **characterized in that** the chemical and/or physical properties of the separation body are changed by influencing the separation body by
a) admixing reagents to the mobile phase which, as soon as they enter defined spatial portions inside the separation body together with the mobile phase, act or react there and thereby change the local flow parameters, and/or
b) exposing defined spatial portions of the separation body to radiation from outside the body.

9. A method according to one of the preceding claims, **characterized in that** locally influencing the chemical and/or physical properties of the separation body restricts the flow of the mobile phase substantially to one direction (X, Y, Z).

10. A method according to one of the preceding claims, **characterized in that** the separation body (1) is designed to be monolithic or composed of monolithic segments.

## Patentansprüche

1. Verfahren zur Durchführung dreidimensionaler Chromatografie, bei dem ein Trennkörper (1) von wenigstens einer mobilen Phase durchströmt wird, wobei der Trennkörper (1) sich in drei vorzugsweise senkrecht zueinander verlaufenden Richtungen (X, Y, Z) erstreckt, und wobei der Körper (1) in jeder Richtung einen vorgebbaren Rückhaltemechanismus für einen in einer mobilen Phase transportierten Analyten aufweist, wobei die mobile Phase den Trennkörper aufgrund eines Druckgefälles oder einer am Trennkörper anliegenden elektrischen Spannung durchströmt,
**dadurch gekennzeichnet, dass**
die Strömung mindestens einer mobilen Phase innerhalb des Trennkörpers räumlich und/oder zeitlich gezielt gesteuert wird durch lokale Beeinflussung der chemischen und/oder physikalischen Eigenschaften des Trennkörpers.

2. Verfahren nach Anspruch 1, **dadurch gekennzeichnet, dass** die Strömungsrichtung und/oder die Strömungsmenge innerhalb des Trennkörpers gesteuert wird durch lokale Elektromigration mittels Steuerung der Oberflächenladung.

3. Verfahren nach einem der vorhergehenden Ansprüche, **dadurch gekennzeichnet, dass** die Strömungsrichtung und/oder die Strömungsmenge innerhalb des Trennkörpers lokal gesteuert wird durch halbdurchlässige Wandungen.

4. Verfahren nach einem der vorhergehenden Ansprüche, **dadurch gekennzeichnet, dass** die Strömungsrichtung und/oder die Strömungsmenge innerhalb des Trennkörpers lokal gesteuert wird durch Entnetzung.

5. Verfahren nach einem der vorhergehenden Ansprüche, **dadurch gekennzeichnet, dass** die Strömungsrichtung und/oder die Strömungsmenge innerhalb des Trennkörpers lokal gesteuert wird durch Entmischung des Eluenten.

6. Verfahren nach einem der vorhergehenden Ansprüche, **dadurch gekennzeichnet, dass** die Strömungsrichtung und/oder die Strömungsmenge innerhalb des Trennkörpers lokal gesteuert wird durch thermisch gesteuerte oder lichtgesteuerte Mikroventile.

7. Verfahren nach einem der vorhergehenden Ansprüche, **dadurch gekennzeichnet, dass** die Strömungsrichtung und/oder die Strömungsmenge innerhalb des Trennkörpers lokal gesteuert wird durch thermisch oder elektrisch steuerbare Veränderung der physikalischen oder chemischen Eigenschaften des Trennkörpers.

8. Verfahren nach einem der vorhergehenden Ansprüche, **dadurch gekennzeichnet, dass** die chemischen und/oder physikalischen Eigenschaften des Trennkörpers verändert werden durch Einwirkung auf den Trennkörper, indem
a) der mobilen Phase Reagenzien beigemischt werden, die, sobald sie mit der mobilen Phase in definierte räumliche Bereiche innerhalb des Trennkörpers gelangen, dort agieren oder reagieren und dadurch die lokalen Strömungsparameterverändern, und/oder
b) definierte räumliche Bereiche des Trennkörpers von außerhalb des Körpers bestrahlt werden.

9. Verfahren nach einem der vorhergehenden Ansprüche, **dadurch gekennzeichnet, dass** die lokale Beeinflussung der chemischen und/oder physikalischen Eigenschaften des Trennkörpers die Strömung der mobilen Phase im Wesentlichen auf eine Richtung (X, Y, Z) begrenzt.

10. Verfahren nach einem der vorhergehenden Ansprüche, **dadurch gekennzeichnet, dass** der Trennkörper (1) monolithisch aufgebaut ist oder sich aus monolithischen Segmenten zusammensetzt.

## Revendications

1. Procédé de réalisation d'une chromatographie tridimensionnelle, dans lequel au moins une phase mobile passe à travers un corps de séparation (1), ledit corps de séparation (1) s'étendant dans trois directions (X, Y, Z) qui sont de préférence perpendiculaires les unes aux autres, et ledit corps (1) présentant un mécanisme de rétention qui peut être prédéterminé dans chaque direction pour une analyte transportée dans une phase mobile, ladite phase mobile passant à travers le corps de séparation en raison d'une différence de pression ou d'une tension électrique appliquée au corps de séparation ;
**caractérisé en ce que** :
l'écoulement d'au moins une phase mobile à l'intérieur du corps de séparation est commandé délibérément en termes d'espace et/ou de temps en influençant localement les propriétés chimiques et/ou physiques du corps de séparation.

2. Procédé selon la revendication 1, **caractérisé en ce que** la direction d'écoulement et/ou le volume d'écoulement à l'intérieur du corps de séparation est commandée par une électromigration locale en commandant la charge de surface.

3. Procédé selon l'une quelconque des revendications précédentes, **caractérisé en ce que** la direction d'écoulement et/ou le volume d'écoulement à l'intérieur du corps de séparation est commandée localement au moyen de parois semi-perméables.

4. Procédé selon l'une quelconque des revendications précédentes, **caractérisé en ce que** la direction d'écoulement et/ou le volume d'écoulement à l'intérieur du corps de séparation est commandée localement au moyen d'un démouillage.

5. Procédé selon l'une quelconque des revendications précédentes, **caractérisé en ce que** la direction d'écoulement et/ou le volume d'écoulement à l'intérieur du corps de séparation est commandée localement au moyen d'une démixtion d'un éluant.

6. Procédé selon l'une quelconque des revendications précédentes, **caractérisé en ce que** la direction d'écoulement et/ou le volume d'écoulement à l'intérieur du corps de séparation est commandée localement au moyen de micro-valves commandées thermiquement ou par la lumière.

7. Procédé selon l'une quelconque des revendications précédentes, **caractérisé en ce que** la direction d'écoulement et/ou le volume d'écoulement à l'intérieur du corps de séparation est commandée localement au moyen d'une variation des propriétés physiques ou chimiques du corps de séparation qui peut être commandée thermiquement ou électriquement.

8. Procédé selon l'une quelconque des revendications précédentes, **caractérisé en ce que** les propriétés chimiques et/ou physiques du corps de séparation sont modifiées en influençant le corps de séparation par les étapes consistant à :
a) mélanger des réactifs à la phase mobile qui, dès qu'ils pénètrent dans des parties spatiales définies à l'intérieur du corps de séparation avec la phase mobile, y agissent ou réagissent et modifient de ce fait les paramètres d'écoulement local ; et / ou
b) exposer des parties spatiales définies du corps de séparation à un rayonnement en provenance de l'extérieur du corps.

9. Procédé selon l'une quelconque des revendications précédentes, **caractérisé en ce que** le fait d'influencer localement sur les propriétés chimiques et/ou physiques du corps de séparation, limite l'écoulement de la phase mobile sensiblement à une direction (X, Y, Z).

10. Procédé selon l'une quelconque des revendications précédentes, **caractérisé en ce que** le corps de séparation (1) est conçu pour être monolithique ou composé de segments monolithiques.
